# FASCICULE DE BREVET EUROPEEN

(11) **EP 0 929 770 B1**
(45) Date de publication et mention de la délivrance du brevet: **30.07.2003**
(21) Numéro de dépôt: 98941506.2
(22) Date de dépôt: 31.07.1998
(51) Int. Cl.: F16L 25/02

(54) **DISPOSITIF DE RACCORDEMENT ELECTRIQUEMENT ISOLANT ENTRE DEUX ELEMENTS METALLIQUES**
VORRICHTUNG ZUR ELEKTRISCH ISOLIERENDEN VERBINDUNG VON ZWEI METALLSTÜCKEN
DEVICE FOR ELECTRICALLY INSULATING THE CONNECTION BETWEEN TWO METAL ELEMENTS

(30) Priorité: 04.08.1997 FR 9710059
(43) Date de publication de la demande: 21.07.1999
(73) Titulaire: Geoservices, 93151 Le Blanc-Mesnil (FR)
(72) Inventeur: SOULIER, Louis, F-95110 Sannois (FR)
(74) Mandataire: Benoist, François
(86) Numéro de dépôt international: FR9801705
(87) Numéro de publication internationale: WO99008035

(56) Documents cités:
- WO-A-85/03249
- DE-A- 4 029 763
- FR-A- 1 491 971
- US-A- 4 601 493
- US-A- 4 785 247
- US-A- 5 394 141

## Description

La présente invention concerne un dispositif de raccordement entre deux éléments métalliques de façon à isoler électriquement les deux éléments.

Dans le domaine de l'exploration et de l'exploitation pétrolière, on utilise parfois en cours de forage de puits, des moyens de transmission électromagnétique nécessitant une antenne constituée par deux parties de tubulaires raccordées mécaniquement mais isolées électriquement. On a donc besoin d'un raccord isolant électriquement et de plus, résistant à la torsion, à la flexion, à la traction et à la compression selon les contraintes que peuvent subir les éléments tubulaires d'une garniture de forage, d'une colonne de tubes de production, ou d'un train de test de production.

On connaît le document US-A-5163714 qui décrit un raccord pouvant rendre le service demandé, mais sa capacité de résistance mécanique est limitée notamment par la résistance au collage d'une résine époxy et par les épaisseurs réduites des pièces mâle et femelle. De plus, la solution technique utilisée impose une longueur de raccord isolant importante, ce qui ne facilite pas son utilisation dans un puits, ni son mode de fabrication. D'autre part, la tenue de la résine à une température élevée, c'est-à-dire au delà de 130°C, demande l'utilisation de résines très coûteuses et très délicates à mettre en oeuvre.

La présente invention propose une autre solution présentant notamment une fabrication moins coûteuse, une longueur de raccord moins importante et une résistance mécanique plus facilement optimisée.

Ainsi, l'invention concerne un dispositif de raccordement entre deux parties métalliques suivant la revendication 1. Le dispositif comporte un premier élément comportant une surface conique femelle et un second élément comportant une surface conique mâle. L'une au moins des deux surfaces est revêtue d'une couche mince d'un matériau isolant électriquement. Les deux éléments sont emmanchés l'un dans l'autre de façon à être rendus solidaires mécaniquement et isolés électriquement.

Le second élément peut être revêtu de la couche mince, la couche ayant un état de surface contrôlé et éventuellement rectifié.

La couche peut avoir une épaisseur comprise entre 0,1 et 0,5 mm et de préférence entre 0,2 et 0,4 mm et être constituée à partir d'un matériau de type céramique.

Des moyens d'étanchéité peuvent être placés sensiblement aux deux extrémités de la couche mince afin d'éviter l'intrusion d'un fluide entre les deux surfaces coniques.

La pente de la surface conique peut présenter un angle compris entre 1 et 2° et de préférence compris entre 1,3 et 1,5°.

Un troisième élément peut être solidaire du second élément et venir en contact du premier élément par l'intermédiaire d'au moins une bague isolante électriquement.

La bague peut comporter des joints de façon que le contact entre ledit premier élément et ledit troisième élément soit étanche.

La bague peut comporter une couche de matériau isolant électriquement sur au moins une partie des surfaces en contact avec les extrémités du premier et du troisième élément.

L'invention concerne également une antenne d'émission ou de réception d'ondes électromagnétiques comprenant un dipôle constitué par le dispositif de raccordement suivant l'invention, qui peut concerner de préférence la constitution d'un dipôle dans une garniture de forage, une garniture de test de production, ou de tubes casing ou tubing.

L'invention sera mieux comprise et ses avantages apparaîtront plus clairement à la lecture de la description qui suit d'un exemple de réalisation illustré par les figures ci-annexées, parmi lesquelles :

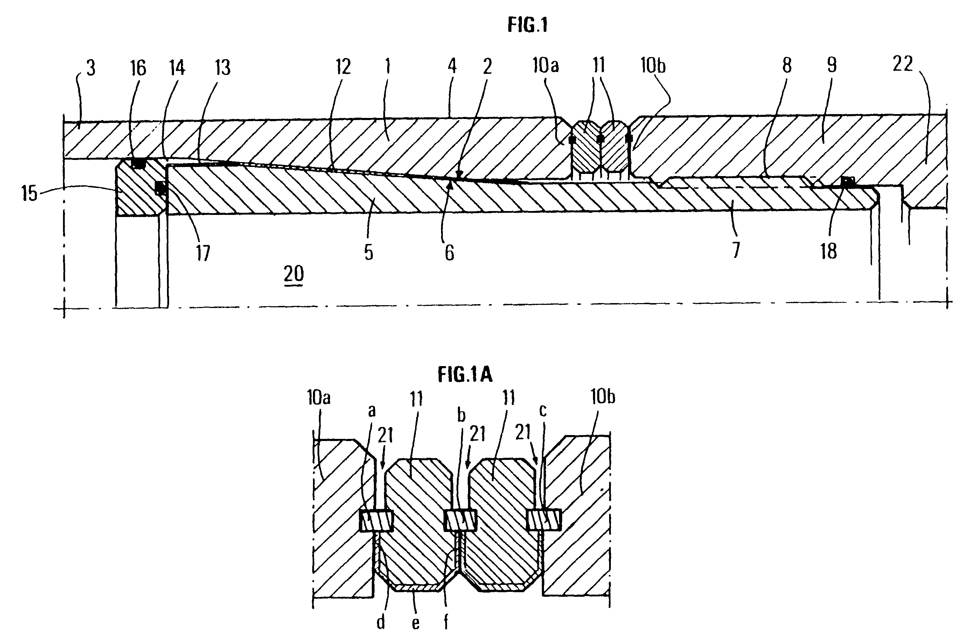

- La figure 1 représente schématiquement, en coupe partielle, un raccord selon l'invention.
- La figure 1A représente schématiquement un détail de constituants du raccord.

La pièce de jonction référencée 1 (dite femelle) a une de ses extrémités 3 raccordée à une partie d'un train de tubes, ou de tiges, par un moyen de connexion conventionnel (non représenté ici), par exemple un filetage. La surface interne 2 de la pièce 1 est conique sur une certaine longueur. La surface externe 4 est généralement cylindrique comme la plupart des éléments vissés à un ensemble de tubes destinés à être descendus dans un puits foré.

Une seconde pièce de jonction 5 (dite mâle), située à l'intérieur de la pièce 1, a une surface externe 6 de géométrie conique correspondante à la surface interne 2 de la pièce 1. L'extrémité 7 de la pièce 5 est sensiblement cylindrique et comporte un filetage 8 comme moyen d'assemblage de la pièce 5 avec une partie de liaison 9 comportant à une extrémité 22 un autre moyen de connexion mécanique avec une autre partie de l'ensemble des tubes. Ce moyen de connexion, non représenté ici, peut être tout moyen connu pour relier mécaniquement des tubes, par exemple un filetage conique.

Entre l'extrémité 10a (opposée à l'extrémité 3) de la pièce 1 et l'extrémité 10b de la pièce 9 (opposée à l'extrémité 22), on intercale une série de bagues 11 dont, au moins les trois faces d, e, et f (figure 1A) sont revêtues d'une couche de matériau isolant, par exemple de la céramique ayant une caractéristique d'isolation électrique déterminée et une bonne tenue à la température. Des joints toriques a, b, et c (figure 1A) sont placés entre chaque plan de jonction défini par l'empilage des bagues 11 entre l'extrémité 10a de la pièce 1 et l'extrémité 10b de la pièce 9. Les plans de jonction des bagues 11 présentent un retrait de quelques dixièmes de millimètres sur leur surface située à l'extérieur des joints a, b, c, afin qu'il y ait un jeu suffisant 21 pour qu'il n'y ait pas de contact électrique entre les différentes surfaces des plans de jonction . En effet, ces parties situées extérieurement ne peuvent pas être isolées du fluide extérieur et des abrasions. Ces surfaces extérieures ne peuvent donc pas être efficacement isolées électriquement par une couche de revêtement. Les espaces 21 sont déterminés pour que l'isolement, éventuellement imparfait, entre les extrémités 10a et 10b soient cependant suffisant pour que le présent raccord puisse être utilisé pour fabriquer une antenne de réception ou de transmission, par exemple d'onde électromagnétique.

On effectue un revêtement 12 sur au moins une des surfaces coniques 6 et 2 avec un matériau dur et isolant électriquement, par exemple de la céramique. De préférence, on utilisera de la céramique à base d'alumine (environ 97%) et d'oxyde de titane (environ 3%) déposée par flux de plasma.

Pour éviter des fuites ou courts-circuits électriques important entre les pièces de jonction 1 et 5, l'extrémité 13 de la pièce de jonction 5 est usinée en retrait par rapport à la surface interne de la pièce 1, une des deux surfaces en regard et espacées d'un jeu 14 étant revêtue du même matériau isolant 12. Bien entendu, le jeu 14 peut être obtenu par une autre forme d'usinage équivalente à celle représentée sur la figure, mais remplissant la même fonction.

Une bague 15 en matériau non conducteur fait office de porte joint torique des joints 16 et 17, sans établir de liaison électrique entre les deux pièces de jonction 1 et 5. La bague 15 peut être fixée sur l'une au moins des pièces 5 ou 1 par tout moyen à la portée du mécanicien, par exemple une bague filetée vissée sur un filetage femelle usiné dans l'alésage intérieur de la pièce 1.

A l'autre extrémité 7 de la pièce 5, proche du filetage 8 liant la pièce 5 à la pièce de liaison 9, on place un joint torique 18 dans une gorge adaptée.

Bien entendu, on ne sortira pas du cadre de cette invention si on multiplie le nombre, et/ou si on change le type de joints à chaque niveau ou plan d'étanchéité.

Ainsi, les parties 3 et 9 sont isolées électriquement par la présence de la couche 12, des bagues isolantes 11 et du jeu 14.

En raison de la porosité des couches de céramique isolantes et pour éviter la corrosion des surfaces d'accrochage des céramiques, il faut les isoler des fluides présents à l'extérieur ou à l'intérieur des éléments tubulaires, c'est à dire au fluide de puits dans le cas d'application dans le domaine de l'exploration ou de l'exploitation des gisements pétroliers, et du fluide en circulation dans l'espace intérieur 20 des tubes et par conséquent également à l'intérieur du raccord isolant selon l'invention. C'est le rôle des joints toriques a, b, et c (figure 1A) de rendre étanche le raccord au fluide extérieur, et aux joints toriques 16, 17 et 18 d'effectuer l'étanchéité du raccord au fluide intérieur.

En plus de protéger la couche de céramique, il faut éviter l'introduction des fluides de puits dans les assemblages.

La fabrication et le montage du raccord en exemple sont les suivants :
- on fabrique par usinage la pièce 5 que l'on recouvre selon les techniques conventionnelles de la couche de céramique 12, on rectifie éventuellement l'état de surface de la couche 12, afin que la surface de contact soit optimale sans risquer de déchirure de la couche ;
- dans certains cas, on peut appliquer un traitement additionnel pour modifier et généralement accroître le coefficient de frottement entre les deux pièces coniques. Ceci permet d'accroître le couple transmis par les cônes et également permet de diminuer la contrainte de pression d'appui sur la surface conique.
- on emmanche la pièce 5 dans la pièce 1, en appliquant une contrainte de traction déterminée entre les deux pièces. La contrainte de montage est déterminée en fonction de la résistance mécanique du raccord, compte tenu de la nature des matériaux et des sections de métal disponibles ;
- on place l'empilement des bagues isolantes 11 et on visse la pièce 9 pour la bloquer en butée sur les bagues afin de contenir les contraintes de compression en cours d'utilisation, par exemple une charge sur le packer (organe d'étanchéité dans un puits) en cours de test de production (DST) ou le poids sur l'outil en cours de forage ;
- on place l'anneau intérieur 15 pour réaliser l'étanchéité interne.

Il est clair que les efforts de traction sur un tel raccord sont supportés par la coopération du cône mâle dans le cône femelle, que les efforts de compression sont essentiellement supportés par les extrémités 10a, 10b et les bagues 11, que les efforts de torsion sont essentiellement absorbés par la friction des cônes 2 et 6.

De préférence, c'est le cône mâle 6 de la pièce de jonction 5 qui sera revêtu de la couche de céramique, d'épaisseur environ 0,2 à 0,4 mm, par dépôt par un flux de plasma. En effet, dans ce cas, il est plus facile d'effectuer une rectification de la surface conique 6 de façon à ce que la géométrie de la couche soit suffisamment parfaite pour favoriser l'ajustement entre le cône mâle et le cône femelle. De préférence, la pente des cônes 2 et 6 est comprise entre 1° et 2°, en particulier comprise entre 1,3° et 1,5°. La valeur de la conicité est fonction des performances mécaniques du raccord, notamment en traction et en couple.

Dans le cas d'une utilisation du raccord isolant selon la présente invention à une garniture de test de production en cours de forage (DST), on peut réaliser selon l'invention un raccord ayant, par exemple, les caractéristiques suivantes :
- Diamètre extérieur :127 mm (5 inches)
- Diamètre intérieur : 66 mm
- Longueur de portée isolée : environ 175 mm
- traction max. : au moins 160 t
- compression max. : au moins 160 t
- Couple max. : 7200 daN.m
- Pression interne de service : au moins 103 MPa (15000 psi)
- Pression externe de service : au moins 103 MPa (15000 psi)

La présente invention ne se limite pas à la céramique citée en exemple. En effet, tout matériau isolant pouvant revêtir sous forme d'une couche mince une pièce métallique, peut convenir. Cependant, il faut que son coefficient de friction soit suffisant pour transmettre les efforts mécaniques de la partie inférieure à la partie supérieure et que sa résistance à la compression soit telle qu'elle résiste aux efforts de contact entre les parties coniques emmanchées l'une dans l'autre. Il faut évidemment que la couche mince soit suffisamment isolante électriquement pour permettre la constitution d'une antenne de transmission ou de réception d'ondes électromagnétiques.

La présente invention peut s'appliquer à la constitution d'une antenne pour la transmission électromagnétique, par exemple décrit dans le document US-5394141, cité ici en référence. Ladite antenne peut être intercalée dans un ensemble de tiges ou de masses-tiges de forage, dans un ensemble de tubes d'une garniture de test de production en cours de forage ou post forage, dans un ensemble de tubes casing, pour la transmission d'informations acquises par des capteurs de fond.

## Revendications

1. Dispositif de raccordement entre deux parties métalliques pour la constitution d'un dipôle formant une antenne dans une garniture de forage, une garniture de test de production, de tubes casing ou tubing, qui comporte un premier élément métallique (1) comportant une surface conique femelle (2), un second élément métallique (5) comportant une surface conique mâle (6), en ce que l'une au moins des deux surfaces est revêtue d'une couche mince (12) d'un matériau isolant électriquement, en ce que lesdits deux éléments (1, 5) sont emmanchés l'un dans l'autre de façon à être rendus solidaires mécaniquement tout en étant isolés électriquement et en ce que les surfaces coniques (2, 6) sont déterminées au moins en fonction du couple à transmettre entre le premier élément métallique (1) et le deuxième élément métallique (5).

2. Dispositif selon la revendication 1, dans lequel seul le second élément (5) est revêtu de ladite couche mince, ladite couche ayant un état de surface contrôlé et éventuellement rectifié.

3. Dispositif selon l'une des revendications précédentes, dans lequel ladite couche a une épaisseur comprise entre 0,1 et 0,5 mm et de préférence entre 0,2 et 0,4 mm et est constituée à partir d'un matériau de type céramique.

4. Dispositif selon l'une des revendications précédentes, dans lequel des moyens d'étanchéité (a, b, c ; 18 ; 15) sont placés sensiblement aux deux extrémités de ladite couche mince afin d'éviter l'intrusion d'un fluide entre lesdites deux surfaces coniques.

5. Dispositif selon l'une des revendications précédentes, dans lequel la pente de ladite surface conique présente un angle compris entre 1° et 2°.

6. Dispositif selon l'une des revendications précédentes, dans lequel un troisième élément (9) est solidaire dudit second élément (5) et vient en contact dudit premier élément (1) par l'intermédiaire d'au moins une bague (11) isolante électriquement.

7. Dispositif selon la revendication 6, dans lequel ladite bague (11) comporte des joints (a, b, c) de façon que le contact entre ledit premier élément (1) et ledit troisième élément (9) soit étanche.

8. Dispositif selon l'une des revendications 6 ou 7, dans lequel ladite bague 11 comporte une couche de matériau isolant électriquement sur au moins une partie des surfaces en contact avec les extrémités 10a et 10b du premier (1) et troisième élément (9).

9. Antenne d'émission ou de réception d'ondes électromagnétiques comprenant un dispositif de raccordement selon l'une des revendications 1 à 8.

## Patentansprüche

1. Vorrichtung zur Verbindung zwischen zwei Metallteilen zur Bildung eines Dipols, der eine Antenne in einer Bohrganutur, einer Produktionstestgarnitur, Futterrohren oder Produktionsrohren bildet, bestehend aus einem ersten, eine Kegelfläche (2) mit Innengewinde enthaltenden Metallelement (1), einem zweiten, eine Kegelfläche (6) mit Außengewinde enthaltenden Metallelement (5), wobei wenigstens eine der zwei Flächen mit einer dünnen Schicht eines elektrisch isolierenden Materials versehen ist, die beiden Elemente (1, 5) sind einander eingesteckt um mechanisch verbunden zu sein indem sie elektrisch isoliert sind, und die Kegelflächen (2, 6) sind wenigstens in Abhängigkeit von dem zwischen dem ersten Metallelement (1) und dem zweiten Metallelement (5) zu übertragenden Moment bestimmt.

2. Vorrichtung gemäß Anspruch 1, in welcher nur das zweite Element (5) mit der besagten dünnen Schicht versehen ist, wobei die besagte Schicht einen kontrollierten und möglicherweise rektifizierten Oberflächenzustand aufweist.

3. Vorrichtung gemäß irgendeinem der vorstehenden Ansprüche, in welcher die besagte Schicht eine Dicke zwischen 0,1 und 0,5 mm, vorzugsweise zwischen 0,2 und 0,4 mm aufweist, und aus einem keramikähnlichen Material besteht.

4. Vorrichtung gemäß irgendeinem der vorstehenden Ansprüche, in welcher Abdichtungsmittel (a, b, c ; 18 ; 15) an beiden Enden der besagten dünnen Schicht angeordnet sind, um einen Fluideinfluß zwischen den besagten zwei Kegelflächen zu verhindern.

5. Vorrichtung gemäß irgendeinem der vorstehenden Ansprüche, in welcher die Neigung der besagten Kegelfläche einen Winkel zwischen 1° und 2° aufweist.

6. Vorrichtung gemäß irgendeinem der vorstehenden Ansprüche, in welcher ein drittes Element (9) mit dem besagten zweiten Element (5) verbunden ist und mit dem besagten ersten Element (1) mittels wenigstens eines elektrisch isolierendes Ringes (11) in Berührung kommt.

7. Vorrichtung gemäß Anspruch 6, in welcher der besagte Ring (11) mit Dichtungen (a, b, c) versehen ist, so daß das besagte erste Element (1) und das besagte dritte Element (9) unter abgedichteten Bedingungen in Berührung kommen.

8. Vorrichtung gemäß Anspruch 6 oder 7, in welcher der besagte Ring (11) mit einer Schicht eines elektrisch isolierenden Materials wenigstens auf einem Teil der mit den Enden (10a) und (10b) des ersten (1) und dritten (9) Elementes in Berührung kommenden Flächen versehen ist.

9. Antenne zur Sendung oder zum Empfang elektromagnetischer Wellen, die mit einer Verbindungsvorrichtung gemäß irgendeinem der Ansprüche 1 bis 8 versehen ist.

## Claims

1. A device for connecting two metal parts so as to make a dipole forming an antenna in a drill string, a production test string, casing tubes or tubing, comprising a first metal element (1) having a female conical surface (2), a second metal element (5) having a male conical surface (6), at least one of the two surfaces being coated with a thin layer (12) of an electrically insulating material, said two elements (1, 5) are fitted into one another so as to be mechanically secured to one another while being electrically insulated and conical surfaces (2, 6) are determined at least as a function of the torque to be transmitted between first metal element (1) and second metal element (5).

2. A device as claimed in claim 1, wherein only second element (5) is coated with said thin layer, said layer having a controlled and possibly rectified surface state.

3. A device as claimed in any one of the previous claims, wherein said layer has a thickness ranging between 0.1 and 0.5 mm, preferably between 0.2 and 0.4 mm, and it is made from a ceramic type material.

4. A device as claimed in any one of the previous claims, wherein seal means (a, b, c; 18; 15) are arranged substantially at the two ends of said thin layer in order to prevent fluid from getting between said two conical surfaces.

5. A device as claimed in any one of the previous claims, wherein the slope of said conical surface has an angle ranging between 1° and 2°.

6. A device as claimed in any one of the previous claims, wherein a third element (9) is secured to said second element (5) and comes into contact with said first element (1) by means of at least one electrically insulating ring (11).

7. A device as claimed in claim 6, wherein said ring (11) comprises seals (a, b, c) so that contact between said first element (1) and said third element (9) is sealed.

8. A device as claimed in any one of claims 6 or 7, wherein said ring (11) comprises a layer of an electrically insulating material on at least part of the surfaces in contact with ends (10a) and (10b) of first element (1) and third element (9).

9. Antenna for sending or receiving electromagnetic waves comprising a connecting device as claimed in any one of claims 1 to 8.
